# EUROPÄISCHE PATENTANMELDUNG

(11) **EP 4 613 802 A1**
(43) Veröffentlichungstag der Anmeldung: **10.09.2025**
(21) Anmeldenummer: 25161926.8
(22) Anmeldetag: 05.03.2025
(51) Int. Cl.: C08K 9/04, B60C 1/00, C09C 1/30, C08J 3/20

(54) **VERFAHREN ZUR HERSTELLUNG EINES MODIFIZIERTEN SILICAS ZUR HERSTELLUNG EINER MODIFIZIERTEN KAUTSCHUKMISCHUNG**

(30) Priorität: 06.03.2024 DE 102024106466
(71) Anmelder: Schiemann, Jan, 21509 Glinde (DE)
(72) Erfinder: Schiemann, Jan, 21509 Glinde (DE); Kuprewitz, Winton, 30167 Hannover (DE); Giese, Ulrich, 31191 Algermissen (DE)
(74) Vertreter: Hamm&Wittkopp Patentanwälte PartmbB

(57) **Zusammenfassung**

Die vorliegende Erfindung betrifft ein Verfahren zur Herstellung eines modifizierten Silicas als Füllstoff für Gummiartikel, wobei das Verfahren *in situ* gebildetes Silica umfasst, welches mit einem fließfähigen Polymer umgeben wird. Das erfindungsgemäße modifizierte Silica ermöglicht eine erhebliche Verkürzung der Inkorporationszeit des Füllstoffes in Kautschukmischungen. Weiterhin umfasst die vorliegende Erfindung eine modifizierte Kautschukmischung sowie aus der modifizierten Kautschukmischung herstellbare Gummiartikel.

## Beschreibung

Die vorliegende Erfindung betrifft ein Verfahren zur Herstellung von modifiziertem Silica als Füllstoff zur Herstellung von modifizierten Kautschukmischungen, wobei das Verfahren *in situ* gebildetes Silica umfasst, welches mit einem fließfähigen Polymer umgeben wird. Weiterhin umfasst die vorliegende Erfindung modifiziertes Silica als Füllstoff zur Herstellung von modifizierten Kautschukmischungen, sowie ein Verfahren zur Herstellung modifizierter Kautschukmischungen, welche aus einer Kautschukmischung unter Zugabe des erfindungsgemäßen modifizierten Silicas herstellbar sind. Die benötigte Einmischzeit (Inkorporationszeit) des erfindungsgemäßen modifizierten Silicas als Füllstoff in eine Kautschukmischung zum Erreichen einer homogenen Verteilung des Füllstoffes in der Kautschukmatrix ist signifikant kürzer als die Einmischzeiten der aus dem Stand der Technik bekannten Füllstoffe. Weiterhin umfasst die vorliegende Erfindung eine modifizierte Kautschukmischung sowie aus der modifizierten Kautschukmischung herstellbare Gummiartikel.

### Stand der Technik

Kautschukmischungen enthalten in der Regel Füllstoffe, um die technischen Anforderungen z.B. an Reifenmischungen oder ähnliches zu verbessern. Hierzu zählen z.B. geringer Abrieb, geringer Rollwiderstand und hohe Nassrutschfestigkeit. In die Kautschukmischung für Laufstreifen von Fahrzeugreifen werden beispielsweise die unterschiedlichsten Materialien eingemischt, um die Fahreigenschaften, z. B. die Wintereigenschaften, des Reifens und das Verarbeitungsverhalten der Mischung positiv zu beeinflussen. Unter anderem wird den zur Herstellung dieser Produkte verwendeten Kautschukmischungen Silica als Füllstoff zugeschlagen.

Die Füllstoffe werden üblicherweise in Form von Partikeln in die Kautschukmischung eingebracht, indem die Partikel der Kautschukmischung für den Laufstreifen vor der Extrusion beigemischt werden. Dies führt zu einem erhöhten Verschleiß bei Extrudern und Mischeinrichtungen. Ferner ergeben sich Probleme in Bezug auf eine gleichmäßige oder gewünschte Verteilung der Partikel in der Mischung. So kommt es häufig zu der Bildung von Partikelansammlungen, so genannten Nestern, die sich nur mit großem Mischungsaufwand, insbesondere lange Mischzeiten, auflösen lassen. Außerdem ist es möglich, dass die Partikel beim Mischen durch Scherkräfte und Wärmeentwicklung zerstört werden. Falls die Mischungszusammensetzung im Mischer geändert werden soll auf eine Mischung ohne Partikel, ergibt sich zusätzlich das Problem, dass die Mischungsreste mit den Partikeln zunächst vollständig entfernt werden müssen, bevor die neue Mischung in den Mischer gegeben werden kann. Dies bringt einen hohen Zeitverlust beim Mischungswechsel mit sich.

Silica (Kieselsäure) ist ein weit verbreiteter Füllstoff für Kautschuk- und Gummimischungen, Insbesondere ist Kieselsäure häufig in Gummimischungen für Fahrzeugreifen enthalten. Die Oberfläche der Kieselsäurepartikel ist jedoch aufgrund des Vorhandenseins polarer Hydroxylgruppen hydrophil, während das Gummimaterial in einem Reifen in der Regel eher hydrophob ist, was die Dispersion der Kieselsäurepartikel in der Gummimischung während der Reifenherstellung erschweren kann.

Aus der US 2002/0069948 A1 ist ein Verfahren zur Herstellung von Laufstreifen von Fahrzeugreifen bekannt, bei dem verschiedene Materialien, z. B. Fasern, mit einer speziellen Vorrichtung über eine hohle Nadel in bestimmte Bereiche des Laufstreifens injiziert werden. Die Einbringung der Materialien in den Laufstreifen erfolgt dabei in der Weise, dass die Nadel mit beispielsweise der Faser in den auf den Reifenrohling aufgelegten Laufstreifen eingestochen wird. Beim Herausziehen der Nadel bleibt die Faser stecken und wird ggf. abgeschnitten. Mit dem Verfahren lassen sich gewünschte Materialverteilungen und Materialausrichtungen im Laufstreifen erzielen. Reifen mit derartigen Laufstreifen sollen sich im Betrieb durch guten Abriebwiderstand und gute Traktion auszeichnen. Für die Injektion der Materialien ist eine sehr spezielle Vorrichtung notwendig.

DE 102005018154 A1 offenbart ein Verfahren zum Einbringen von Füllstoffpartikeln wie Kieselsäure in Laufstreifen von Fahrzeugreifen. Die Füllstoffpartikel werden mittels eines gasförmigen Trägerstromes in den unvulkanisierten Laufstreifen des Fahrzeugreifens eingeschossen.

EP 1002836 A1 offenbart ein Verfahren, bei welchem ein Überschuss eines Styrol-Butadienkautschuks in einem organischen Lösemittel über einen langen Zeitraum gequollen und gelöst und anschließend mit TEOS, Wasser und einer Base vermischt werden. Daraus ergibt sich eine mit silica-beladene Kautschukmischung, aus der Fahrzeugreifen hergestellt werden können.

EP 0901986 B1 offenbart BET-Oberflächen von Fällungskieselsäuren zur Verwendung in Kautschukmischungen im Bereich von 120 - 300 m²/g. EP 1 525159 B1 offenbart BET-Oberflächen der Fällungskieselsäuren im Bereich von 200 - 300 m²/g,

Es ist bekannt, dass Füllstoffe mit derart großen Oberflächen nur sehr schwer in Kautschukmatrizen einzumischen und homogen zu dispergieren sind.

Die bisher aus dem Stand der Technik bekannten Füllstoffe für Kautschukmischungen lassen sich nur sehr aufwendig in Kautschukmischungen einmischen, u.a. aufgrund der unterschiedlichen Polaritäten der Füllstoffe und der Kautschukmischungen. Es besteht daher ein großer Bedarf an geeigneten Füllstoffen, welche effizient und kostengünstig, insbesondere schneller und einfacher, d.h. mit herkömmlichen Mitteln, in Kautschukmischungen eingebracht werden können. Ebenfalls besteht ein Bedarf an Verfahren zur Herstellung von solchen Füllstoffen.

### Aufgabe der Erfindung

Ziel der vorliegenden Erfindung war es unter anderem, modifiziertes Silica bereitzustellen, welches sich mit herkömmlichen Mitteln aber erheblich einfacher und schneller in eine Kautschukmischung einbringen lässt, und welches eine homogene Verteilung des modifizierten Silicas innerhalb der Kautschukmischung nach einer gegenüber dem Stand der Technik verkürzten Einmischzeit (Inkorporationszeit) ermöglicht. Weiterhin war es eine Aufgabe der vorliegenden Erfindung, modifizierte Kautschukmischungen sowie aus den modifizierten Kautschukmischungen herstellbare Gummiartikel bereitzustellen, welche verbesserte physikalische Eigenschaften gegenüber den aus dem Stand der Technik bekannten Kautschukmischungen bzw. Gummiartikeln aufweisen.

Diese und weitere Aufgaben werden mittels der unabhängigen Patentansprüche gelöst. Bevorzugte Ausgestaltungen sind Teil der Unteransprüche oder sind nachfolgend genauer beschrieben.

### Beschreibung der Erfindung

Zur Lösung dieser Probleme wird unter anderem ein Verfahren zur Herstellung eines modifizierten Silicas vorgeschlagen, bei welchem eine erste Mischung umfassend ein Lösungsmittel und eine siliciumhaltige Verbindung bereitgestellt wird, und aus welcher mittels Erwärmung und/oder mittels Zugabe eines Katalysators *in situ* Silica gebildet wird. Vor, während oder nach der Erwärmung oder der Zugabe des Katalysators wird ein fließfähiges Polymer zugegeben, wobei eine zweite Mischung umfassend Silica erhalten wird. Aus der zweiten Mischung wird durch Einengen und/oder Filtrieren das erfindungsgemäße modifizierte Silica erhalten. Das erfindungsgemäße modifizierte Silica kann insbesondere als Füllstoff zur Herstellung von modifizierten Kautschukmischungen verwendet werden und lässt sich mit herkömmlichen, bekannten Mitteln und Verfahren in kurzer Zeit homogen-verteilt in eine Kautschukmischung einmischen.

Weiterhin umfasst die vorliegende Erfindung modifiziertes Silica, welches gemäß dem erfindungsgemäßen Herstellungsverfahren herstellbar ist. Das erfindungsgemäße modifizierte Silica weist vorzugsweise Partikelgrößen im Bereich von 10 bis 500 nm und/oder spezifische Oberflächen im Bereich von 1 bis ≤ 30 m²/g auf.

Die Verfahren zur Herstellung von modifizierten Kautschukmischungen stellen einen weiteren Aspekt der vorliegenden Erfindung dar. Erfindungsgemäß erfolgt dies durch Einmischen des modifizierten Silicas in eine Kautschukmischung, beispielsweise eine Naturkautschukmischung, wobei eine modifizierte Kautschukmischung erhalten wird.

Weiterhin vorgeschlagen werden modifizierte Kautschukmischungen, welche gemäß dem erfindungsgemäßen Verfahren herstellbar sind, sowie Gummiartikel, die aus der erfindungsgemäßen modifizierten Kautschukmischung herstellbar sind, insbesondere durch Vulkanisation.

### Detaillierte Beschreibung der Erfindung

Im Sinne der vorliegenden Erfindung meint "Silica" einen Füllstoff für Kautschukmischungen, bei dem es sich um ein pulverförmiges Material aus amorphen Partikeln, gewonnen aus löslichen Silikaten durch Fällung aus wässriger Lösung gemäß DIN ISO 1382:2023-08 handelt. "Modifiziertes Silica" im Sinne der vorliegenden Erfindung meint ein pulverförmiges Material gemäß DIN ISO 1382:2023-08, dessen Oberfläche mittels eines fließfähigen Polymers entsprechend des erfindungsgemäßen Verfahrens modifiziert wurde.

Erfindungsgemäß wird ein Verfahren zur Herstellung eines modifizierten Silicas vorgeschlagen, welches sich als Füllstoff zur Herstellung von modifizierten Kautschukmischungen eignet. Das erfindungsgemäße Verfahren umfasst das Bereitstellen einer ersten Mischung, welche wenigstens ein Lösungsmittel und wenigstens eine siliciumhaltige Verbindung umfasst, sowie b1) Erwärmen der Mischung und/oder b2) Zugabe eines Katalysators zu der ersten Mischung. Während den Schritten b1) und/oder b2) wird *in situ* Silica gebildet.

Vor, während oder nach den Schritten b1) und/oder b2) wird wenigstens ein fließfähiges Polymer zugegeben, wobei nach den Schritten b1) und/oder b2) eine zweite Mischung umfassend Silica erhalten wird. Diese zweite Mischung umfassend Silica wird nachfolgend c1) zumindest teilweise eingeengt, und/oder c2) filtriert, wobei nach den Schritten c1) und/oder c2) das erfindungsgemäße modifizierte Silica erhalten wird.

Das Lösungsmittel umfasst vorzugsweise ein organisches Lösungsmittel, wobei das organische Lösungsmittel bevorzugt ausgesucht ist aus einem oder mehreren Mitgliedern der Gruppe, bestehend aus: Alkoholen, Ethern, Estern, Alkanen, vorzugsweise Methanol, Ethanol, Toluol, THF, Cyclohexan, weiter bevorzugt Ethanol und/oder Toluol, insbesondere bevorzugt Ethanol und Toluol.

In einer weiteren bevorzugten Ausgestaltung ist das fließfähige Polymer ein fließfähiger Kautschuk, wobei weiter bevorzugt der fließfähige Kautschuk ausgewählt ist aus der Gruppe, bestehend aus: Dienkautschuken, insbesondere Isopren-Kautschuk (IR), Butadien-Kautschuk (BR), Nitril-Butadien-Kautschuk (NBR), Ethylen-Propylen-Dien-Kautschuk (EPDM), Styrol-Butadien-Kautschuk (SBR) , Chloropren-Kautschuk (CR) und gesättigten Kautschuken, insbesondere hydrierter Acrylnitrilbutadien-Kautschuk (HNBR) und Fluorkautschuk (FKM). Solche fließfähigen Polymere sind aus dem Stand der Technik bekannt und beispielsweise als KURARAY LIQUID RUBBER kommerziell erhältlich.

"Fließfähiges Polymer" im Sinne der vorliegenden Erfindung meint dabei solche Polymere, welche eine Viskosität von höchstens 150 Pa s bei 80 °C aufweisen. Somit sind ausdrücklich auch solche fließfähigen Polymere vom Lichte dieser Erfindung umfasst, welche beispielsweise bei Raumtemperatur als Feststoff vorliegen. Zu solchen fließfähigen Polymeren zählen im Sinne der vorliegenden Erfindung beispielsweise bei Raumtemperatur teilkristalline Polymere und/oder Polymere, welche eine mittlere Molmasse von ≤ 120.000 g/mol, vorzugsweise ≤ 100.000 g/mol aufweisen. Solche Verbindungen sind unter anderem als Transoctenamer bzw. unter dem Handelsnamen VESTENAMER^{®} von der Firma Evonik, bekannt.

In einer weiteren bevorzugten Ausgestaltung weist das fließfähige Polymer, insbesondere der fließfähige Kautschuk, eines oder mehrere der folgenden Merkmale auf:
- eine mittlere Molmasse im Bereich von 1.500 bis 50.000 g/mol, vorzugsweise 2.500 bis 45.000 g/mol, weiter bevorzugt 2.600 bis 42.000 g/mol, und insbesondere bevorzugt 2.600 bis 40.000 g/mol,
- eine Viskosität bei 20 °C von ≤ 150 Pa s, weiter bevorzugt ≤ 70 Pa·s, besonders bevorzugt ≤ 20 Pa s und insbesondere bevorzugt ≤ 1 Pa·s.

In einer anderen bevorzugten Ausgestaltung weist das fließfähige Polymer, insbesondere der fließfähige Kautschuk, eines oder mehrere der folgenden Merkmale auf:
- eine mittlere Molmasse im Bereich von 10.000 bis 120.000 g/mol, vorzugsweise 15.000 bis 100.000 g/mol, weiter bevorzugt 25.000 bis 90.000 g/mol, und insbesondere bevorzugt 30.000 bis 85.000 g/mol,
- eine Viskosität bei 80 °C von ≤ 150 Pa s, weiter bevorzugt ≤ 70 Pa·s, besonders bevorzugt ≤ 20 Pa·s und insbesondere bevorzugt ≤ 1 Pa·s.

In einer weiteren bevorzugten Ausgestaltung umfasst die erste Mischung Wasser. Dabei wird das Wasser insbesondere in einer Menge von 0,01 bis 20 Gew.-%, bevorzugt 0,1 bis 15 Gew.-%, weiter bevorzugt 0,05 bis 10 Gew.-% - jeweils bezogen auf das Gesamtgewicht von siliciumhaltiger Verbindung - verwendet.

Die siliciumhaltige Verbindung ist in einer bevorzugten Ausgestaltung ein Silan, z.B. Tetrachlorsilan, oder ein Silikat, insbesondere ein Orthosilikat (Kieselsäureester). Das Orthosilikat ist weiter bevorzugt ausgesucht aus einem oder mehreren Mitgliedern der Gruppe, bestehend aus: Tetraethylorthosilikat (TEOS), Tetramethylorthosilikat (TMOS), Tetrapropylorthosilikat (TPOS), Tetrabutylorthosilikat (TBOS), und ist insbesondere bevorzugt TEOS bzw. umfasst TEOS. In einer weiteren bevorzugten Ausgestaltung können auch folgende siliciumhaltige Verbindungen eingesetzt werden: SiO₄⁴⁻ (Metasilikate; Wasserglas), SiCl₄, Verbindungen der Formel HₓSiCl_{y}, mit x + y = 4.

In einer weiteren bevorzugten Ausgestaltung, in welcher der ersten Mischung ein Katalysator zugegeben wird (Schritt b2)), ist der Katalysator vorzugsweise ein basischer Katalysator, wobei der basische Katalysator weiter bevorzugt ausgewählt ist aus einem oder mehreren Mitgliedern der Gruppe, bestehend aus: Aminbasen und/oder wässrigen Alkalimetalllaugen, wobei der basische Katalysator noch weiter bevorzugt n-Butylamin und/oder eine wässrige Ammoniaklösung (NH₄OH) umfasst, insbesondere bevorzugt n-Butylamin. Der Katalysator wird weiter vorzugsweise in Mengen von 0,01 bis 4 Gew.-%, weiter bevorzugt 0,01 bis 3 Gew.-%, besonders bevorzugt 1,0 bis 2,8 Gew.-%, jeweils bezogen auf das Gesamtgewicht der siliciumhaltigen Verbindung(en), eingesetzt.

Die *in situ* Bildung des Silicas gemäß einer bevorzugten Ausgestaltung der vorliegenden Erfindung ist dem einschlägigen Fachmann als sogenannte Stöber-Synthese (auch Stöber-Prozess, Stöber-Methode oder Stöber-Verfahren) bekannt. Die Stöber-Synthese ermöglicht die Synthese monodisperser Kolloidsuspensionen von kugelförmigen Silica-Nanopartikeln. Dabei erfolgt die Bildung von Silica durch Hydrolyse von Orthosilikaten und anschließender Kondensation von Kieselsäure in alkoholischen Lösungen, wobei bevorzugt basische Katalysatoren, bspw. Ammoniak (NH₄OH), zur Steuerung der morphologischen Eigenschaften verwendet wird.

In einer weiteren bevorzugten Ausgestaltung, in welcher die erste Mischung erwärmt wird (Schritt b1)), erfolgt die Erwärmung auf ≥ 25 °C, bevorzugt auf ≥ 40 °C, und weiter bevorzugt auf ≥ 80 °C. Dies kann insbesondere gewünscht sein, um die *in situ-*Bildung des Silicas zu beschleunigen.

Bevorzugt beträgt das Massenverhältnis von siliciumhaltiger Verbindung zu fließfähigem Polymer 1000 : 1 bis 1 : 1, vorzugsweise 100 : 1 bis 3 : 1, weiter bevorzugt 20 : 1 bis 5 : 1, noch weiter bevorzugt 15 : 1 bis 10 : 1.

In einer erfindungsgemäßen Ausgestaltung, in welcher die zweite Mischung umfassend Silica zumindest teilweise eingeengt wird (Schritt c1)), erfolgt das Einengen vorzugsweise mittels Reduzierung des Druckes und/oder mittels Erhöhung der Temperatur. In einer weiteren bevorzugten Ausgestaltung wird nach den Schritten c1) und/oder c2) das modifizierte Silica in einem Trockenschrank, insbesondere einem Vakuumtrockenschrank, getrocknet. Dies geschieht vorzugsweise für mindestens ≥ 8 Stunden und unabhängig hiervon bei einer Temperatur von wenigstens 60 °C und/oder die Trocknung erfolgt mittels Spin-Flash-Trocknung.

In einer weiteren erfindungsgemäßen Ausgestaltung, in welcher die zweite Mischung umfassend Silica filtriert wird (Schritt c2)), erfolgt das Filtrieren mittels des einschlägigen Fachmannes bekannter Filtrationsverfahren, z.B. mittels einer Nutsche oder herkömmlicher Fritten.

Weiterhin umfasst die vorliegende Erfindung ein modifiziertes Silica, welches mittels des erfindungsgemäßen Verfahrens herstellbar ist. Das erfindungsgemäße modifizierte Silica weist vorzugsweise eine oder mehrere der folgenden Eigenschaften auf:
- eine Partikelgröße von 15 bis 500 nm, bevorzugt 10 bis 100 nm, besonders bevorzugt 10 bis 80 nm (gemessen mittels Transmissionselektronenmikroskopie (Gerät: Libra 120 von Zeiss)),
- eine spezifische Oberfläche von 1 bis ≤ 30 m²/g, weiter bevorzugt 2 bis ≤ 28 m²/g, besonders bevorzugt 3 bis ≤ 25 m²/g (gemessen mittels volumetrischer Gasadsorption (Gerät: Belsorp MAX)).

Überraschenderweise wurde gefunden, dass die mittels volumetrischer Gasadsorption bestimmbare spezifische Oberfläche (BET-Oberfläche) des erfindungsgemäßen modifizierten Silicas (Füllstoffoberfläche) deutlich geringer ist als die spezifische Oberfläche herkömmlicher Fällungskieselsäuren, welche üblicherweise im Bereich zwischen 100 m²/g und 300 m²/g liegen.

Die erfindungsgemäßen modifizierten Silicas hingegen weisen vorzugsweise BET-Oberflächen von 1 bis ≤ 30 m²/g, weiter bevorzugt 2 bis ≤ 28 m²/g, besonders bevorzugt 3 bis ≤ 25 m²/g, auf, gemessen mittels volumetrischer Gasadsorption (Gerät: Belsorp MAX). Die Erfinder haben weiterhin gefunden, dass sich die BET-Oberfläche des erfindungsgemäßen modifizierten Silicas durch das Verhältnis von siliciumhaltiger Verbindung zu fließfähigem Polymer beeinflussen lässt. So ist es insbesondere möglich, die BET-Oberfläche des erfindungsgemäßen modifizierten Silicas zu verringern, indem ein größeres Verhältnis von fließfähigem Polymer zu siliciumhaltiger Verbindung gewählt wird. Alternativ lässt sich die BET-Oberfläche des erfindungsgemäßen modifizierten Silicas vergrößern, indem ein geringeres Verhältnis von fließfähigem Polymer zu siliciumhaltiger Verbindung gewählt wird.

Ohne an die Theorie gebunden zu sein, wird vermutet, dass das erfindungsgemäße modifizierte Silica zumindest teilweise von dem fließfähigen Polymer überzogen bzw. "gecoated" ist. Es wird vermutet, dass dieses beschichtete bzw. "gecoatete" Silica das Einbringen in die Kautschukmischung zum Erhalt einer modifizierten Kautschukmischung aufgrund der geänderten Oberflächeneigenschaften des *in situ* dargestellten Silicas eine homogene Verteilung in der Kautschukmatrix vereinfacht wird, was mehrere Vorteile mit sich bringt, insbesondere eine Zeitersparnis und damit einhergehend eine Kostenersparnis. Besonders das Einbringen des Füllstoffes (modifiziertes Silica) in unpolare Kautschukmatrizen wie z.B Naturkautschuk/Isoprenkautschuk/Butadienkautschuk wird durch das erfindungsmäße modifizierte Silica erleichtert, da die polaren Silanolgruppen an der Füllstoffoberfläche (teilweise) abgedeckt werden. Auf diese Weise kann auch die Interaktion der Füllstoffpartikel untereinander über Wasserstoffbrückenbindungen reduziert werden. Durch die Wahl des fließfähigen Polymers kann der Kautschukmatrix der Füllstoff in optimierter Kompatibilität angeboten werden. Für unpolare Kautschukmatrizen bieten sich unpolare, fließfähige Polymere an und umgekehrt. Natürlich sind auch andere Kombinationen denkbar.

Das erfindungsgemäße modifizierte Silica weist vorzugsweise eine spezifische BET-Oberfläche (Füllstoffoberfläche) von ≤ 30 m²/g, weiter bevorzugt 2 bis ≤ 28 m²/g, besonders bevorzugt 3 bis ≤ 25 m²/g (gemessen mittels volumetrischer Gasadsorption) auf. Die spezifische Füllstoffoberfläche kann über das Verhältnis von fließfähigem Polymer zu siliciumhaltiger Verbindung beeinflusst werden. Die Erfinder haben gefunden, dass das modifizierte Silica mit einem Lösungsmittel, in welchem das fließfähige Polymer löslich ist, extrahiert werden kann, wobei die Kautschuk-Schicht auf dem modifizierten Silica mittels eines geeigneten Lösungsmittels bzw. eines geeigneten Lösungsmittelgemisches (beispielsweise THF/Cyclohexan/Toluol) entfernt wird. Das so erhaltene extrahierte Silica weißt spezifische Oberflächen (BET-Oberflächen) von > 400 m²/g auf.

Weiterhin umfasst die vorliegende Erfindung ein Verfahren zur Herstellung einer modifizierten Kautschukmischung. Modifizierte Kautschukmischung im Lichte der vorliegenden Erfindung bedeutet dabei eine mit modifizierten Silica-Partikeln versetzte Kautschukmischung.

Das erfindungsgemäße Verfahren zur Herstellung einer modifizierten Kautschukmischung umfasst das Einbringen des erfindungsgemäßen modifizierten Silicas in eine Kautschukmischung, z.B. eine Naturkautschukmischung, wobei eine modifizierte Kautschukmischung erhalten wird. Die Kautschukmischung kann in einer bevorzugten Ausgestaltung noch weitere Komponenten enthalten, beispielsweise Alterungsschutzmittel, Vernetzungsmittel, Verarbeitungshilfsmittel, weitere Füllstoffe (Ruß, Kieselerden). Ebenfalls lässt sich das erfindungsgemäße modifizierten Silica in weitere, dem einschlägigen Fachmann bekannten Kautschuke oder Kautschukmischungen einarbeiten. Hierzu zählen beispielsweise: Naturkautschuk, Isopren-Kautschuk, Butadien-Kautschuk, Butadien / Styrolkautschuk, Chloropren, Nitrilkautschuk, Fluorkautschuk und EPDM-Kautschuk.

Vorzugsweise beträgt das Massenverhältnis von Kautschukmischung zu aktiviertem Silica 0,25 phr bis 120 phr (phr = parts per hundred rubber), vorzugsweise 5 phr bis 100 phr, weiter bevorzugt 5 phr bis 80 phr oder 25 phr bis 60 phr, und unabhängig hiervon wird bevorzugt das modifizierte Silica mittels eines Stempelkneters oder mittels eines Mischextruders und/oder einer Walze in die Kautschukmischung eingemischt, wobei eine modifizierte Kautschukmischung erhalten wird. phr bezeichnet die prozentualen Massenanteile der einzelnen Mischungsbestandteile in einem Rezept einer Kautschukmischung. Dabei werden diese Angaben jeweils auf 100 (Massen-)Teile des Grundpolymers bezogen.

Das Einmischen des erfindungsgemäßen modifizierten Silicas in die Kautschukmischung erfolgt vorzugsweise über einen Zeitraum von 1 bis 20 min, vorzugsweise 4 bis 14 min, wobei nach diesem Zeitraum eine homogene Verteilung des modifizierten Silicas in der so modifizierten Kautschukmischung erhalten wird. Die Inkorporationszeit des erfindungsgemäßen modifizierten Silicas liegt in der Regel um 30 % bis 50 % oder mehr unter der zur Einmischung eines herkömmlichen silica-basierten Füllstoffs notwendigen Zeit. Darüber hinaus wurde gefunden, dass das erfindungsgemäße modifizierte Silica als Füllstoff für modifizierte Kautschukmischungen die Vulkanisationszeit (t₉₀-Zeit; Richtwert für die (Schwefel)-Vulkanisation) um bis zu 60 % reduziert.

Überraschenderweise wurde gefunden, dass sich das erfindungsgemäße modifizierte Silica wesentlich schneller homogen in eine Kautschukmischung einarbeiten lässt als herkömmliches, aus dem Stand der Technik bekanntes Silica. So wurde gefunden, dass bei einem Massenverhältnis von Kautschukmischung zu modifiziertem Silica von 30 phr das erfindungsgemäße, modifizierte Silica bereits nach 4 min homogen in der Kautschukmischung verteilt war, wohingegen unter identischen Versuchsbedingungen das Einbringen von herkömmlichem, aus dem Stand der Technik bekannten Silica 7 min benötigte. Herkömmliches, aus dem Stand der Technik bekanntes Silica, welches unter anderem in der Reifen- bzw. Gummiindustrie als Füllstoff für Kautschukmischungen verwendet wird, ist u.a. unter dem Handelsnamen ULTRASIL^{®} VN 3 von der Firma Evonik bekannt.

Der Gegenstand der vorliegenden Erfindung (das erfindungsgemäße modifizierte Silica) löst somit in überraschend einfacher Weise das Problem einer zügigen und einfachen homogenen Einmischung des Füllstoffs in eine Kautschukmischung. Ein weiterer Vorteil der vorliegenden Erfindung gegenüber dem Stand der Technik besteht darin, dass das erfindungsgemäße, modifizierte Silica ohne weitere Zwischenschritte, d.h. ohne zusätzliche Aktivierungsschritte, in die Kautschukmischung eingemischt werden kann und dass aus der erfindungsgemäßen, modifizierten Kautschukmischung ein Gummiartikel herstellbar ist, ohne dass vorher weitere Behandlungsschritte der Kautschukmischung bzw. der modifizierten Kautschukmischung nötig sind.

Bisherige, aus dem Stand der Technik bekannte Verfahren zur Herstellung von modifizierten Kautschukmischungen bzw. Gummiartikeln, insbesondere bei dynamisch hoch beanspruchten Artikeln wie z.B. Autoreifen, benötigen üblicherweise einen zusätzlichen Mischungsschritt in Form eines Silanisiersungsschrittes. Als Silanisierung wird die chemische Anbindung einer funktionellen Silanverbindung an eine Silicaoberfläche (Kieselsäureoberfläche, Füllstoffoberfläche) genannt. Die Anbindung erfolgt durch Kondensationsreaktionen zwischen hydrolysierbaren Gruppen der verwendeten Silan-Spezies und Hydroxylgruppen an der Oberfläche des Silica-Füllstoffs. Zumeist geschieht die Silanisierung mittels Wärme, sodass die modifizierte Kautschukmischung aus dem Stand der Technik im Innenmischer erhitzt werden muss, insbesondere auf Temperaturen von > 150 °C. Die vorliegende Erfindung ermöglicht es jedoch, modifizierte Kautschukmischungen sowie daraus herstellbare Gummiartikel bereitzustellen, ohne dass hierfür zusätzliche Zwischenschritte, wie beispielsweise Silanisierungsschritte und/oder Erhitzung der modifizierten Kautschukmischung, nötig sind.

In einer weiteren bevorzugten Ausgestaltung werden der Kautschukmischung und/oder dem modifizierten Silica und/oder der modifizierten Kautschukmischung weitere Stoffe zugesetzt. Bei diesen weiteren Stoffen handelt es sich insbesondere um dem einschlägigen Fachmann bekannte Vulkanisationsmittel und/oder Mastizierchemikalien und/oder Ankopplungsreagenzien.

Weiterhin umfasst die vorliegende Erfindung eine modifizierte Kautschukmischung, welche mittels des erfindungsgemäßen Verfahrens herstellbar ist. Auch umfasst die vorliegende Erfindung Gummiartikel, welche mittels der erfindungsgemäßen modifizierten Kautschukmischung herstellbar sind. Vorzugsweise handelt es sich bei diesen Gummiartikeln um Motorenlager, Fahrzeugreifen, Reifenlaufflächen, Kabelmänteln, Schläuchen, Treibriemen, Förderbändern, Walzenbelägen, Reifen, Schuhsohlen, Dichtungsringen und Dämpfungselementen.

Im Sinne der vorliegenden Erfindung unterscheiden sich die erfindungsgemäßen Gummiartikel von der modifizierten Kautschukmischung dadurch, dass Gummiartikel unter anderem mittels Vulkanisation aus der erfindungsgemäßen, modifizierten Kautschukmischung herstellbar sind.

Die Erfinder haben weiterhin überraschenderweise gefunden, dass die erfindungsgemäßen modifizierten Kautschukmischungen sowie die erfindungsgemäßen Gummiartikel verbesserte physikalische Eigenschaften gegenüber herkömmlichen, aus dem Stand der Technik bekannten Kautschukmischungen bzw. Gummiartikeln haben. Diese zeichnen sich unter anderem durch einen geringeren Payne-Effekt aus.

Nachfolgend wird die Herstellung eines erfindungsgemäßen, bevorzugten, modifizierten Silicas dargestellt:

### Herstellung eines modifizierten Silicas (erfindungsgemäß)

In einem Glaskolben werden 487 g des lqIR (LiR-30 kuraray) in 30 mL Toluol vorgelegt. Anschließend erfolgt die Zugabe von 60 g TEOS (Tetraethylorthosilikat), 12 g Wasser und 60 mL Ethanol. Anschließend werden 1,68 g Butylamin hinzugegeben. Das Gemisch wird bei erhöhter Temperatur gerührt (6 h bei 40 °C), wobei sich die Lösung durch den Ausfall von Silica trübt. Das modifizierte Silica wurde abfiltriert und 23,37 g modifiziertes Silica erhalten.

### Herstellung einer modifizierten Kautschukmischung im Innenmischer (30 phr Füllstoff) (Versuchsprodukt A; erfindungsgemäß):

In einem Laborkneter mit einem Füllvolumen von 0,07 L wird 38,0 g Naturkautschuk (NR) vorgegeben und 90 Sekunden mastiziert. 18,5 g modifiziertes Silica (entspricht 30 phr; enthält 4.2 g lqIR) wird zugegeben und eingemischt. Die Einmischdauer beläuft sich auf 1 min. Abschließend erfolgt Zusatz von Vulkanisationsmitteln: 1.3 g Stearinsäure und 1.3 g Zinkoxid (entsprechend jeweils 3 phr), 1.1 g CBS (N-Cyclohexyl-2-benzothiazyl-sulfenamid; 2.5 phr) und 0.6 g Schwefel (entsprechen 1.5 phr) und anschließender Austrag auf ein Walzwerk.

### Herstellung einer modifizierten Kautschukmischung im Innenmischer (60 phr Füllstoff) (Versuchsprodukt B; erfindungsgemäß):

In einem Laborkneter mit einem Füllvolumen von 0,07 L wird 38,0 g Naturkautschuk (NR) vorgegeben und 90 Sekunden mastiziert. 37,0 g modifiziertes Silica (entspricht 60 phr; enthält 8,4 g lqIR) wird zugegeben und eingemischt. Die Einmischdauer beläuft sich auf 1,5 min. Abschließend erfolgt Zusatz von Vulkanisationsmitteln: 1.3 g Stearinsäure und 1.3 g Zinkoxid (entsprechend jeweils 3 phr), 1.1 g CBS (N-Cyclohexyl-2-benzothiazyl-sulfenamid; 2.5 phr) und 0.6 g Schwefel (entsprechen 1.5 phr) und anschließender Austrag auf ein Walzwerk.

Die physikalischen Eigenschaften der erfindungsgemäßen, modifizierten Kautschukmischungen wurden anschließend mit einer nicht-erfindungsgemäßen modifizierten Kautschukmischung verglichen (Referenzprodukt), welches analog den erfindungsgemäßen modifizierten Kautschukmischungen hergestellt wurde, wobei anstatt des erfindungsgemäßen modifizierten Silicas kommerziell erhältliches Silica mit dem Handelsnamen VN3 der Firma Evonik verwendet wurde.

| Eigenschaft | Prüfvorschrift | Versuchsprodukt A | SiO₂-Referenz (VN₃) |
|---|---|---|---|
| Härte Shore A | DIN ISO 48-4 | 55 | 53 |
| Reißdehnung (%) | DIN 53 504 | 527 | 689 |
| Reißfestigkeit (MPa) | | 24 | 35 |
| σ 50 % | | 1.1 | 1.0 |
| σ 100 % | | 1.7 | 1.4 |
| σ 200 % | | 3.4 | 2.3 |
| σ 300 % | | 6.2 | 3.6 |
| σ 500 % | | 20.6 | 14.4 |
| Mooney-Viskosität | ISO 289 ML 1+4 (100 °C) | 76 | 110 |
| Komplexe Viskosität [Pa*s] | DIN 53 513 | 0.05 Hz = 65579 | 0.05 Hz = 617749 |
| | Frequenz-Sweep-Modus 0.05 Hz - 50 Hz | 50 Hz = 869 | 50 Hz = 2636 |
| | Amplitude: 0.5 Grad | | |
| | Temperatur: 100 °C | | |
| Payne-Effekt | ASTM D8059-19 | 377 | 610 |

| Eigenschaft | Prüfvorschrift | Versuchsprodukt B (60 phr) | SiO₂ - Referenz (VN₃) |
|---|---|---|---|
| Härte (Shore A) | DIN ISO 48-4 | 60 | 57 |
| Reißfestigkeit (MPa) | DIN 53 504 | 21 | 14 |
| Bruchdehnung (%) | DIN 53 504 | 657 | 660 |
| Payne-Effekt | ASTM D8059-19 | 1444 | 6221 |

Die Daten bezüglich des Payne-Effektes wurden an unvulkanisierten Mischungen mittels Schwingungsrheologie, in Anlehnung an die ASTM D8059-19, gemessen (Gerät: RPA elite; TA Instruments). Der Füllgrad beider Mischungen (Versuchsprodukt A und Referenz) beträgt 30 phr, bzw. 60 phr, (Versuchsprodukt B und Referenz). Wie aus der Tabelle ersichtlich, weisen die erfindungsgemäßen Versuchsprodukte A und B u.a. eine verbesserte Shore-Härte A, Reißdehnung sowie Reißfestigkeit gegenüber dem nichterfindungsgemäßen Vergleichsprodukt VN3 auf. Ein deutlicher Einfluss des modifizierten Silicas auf den Payne-Effekt lässt sich beim Einsatz von höheren Silica-Konzentrationen beobachten (Versuchsprodukt B), wobei sich eine Menge von 60 phr als besonders vorteilhaft herausstellte.

Weitere Vorteile der vorliegenden Erfindung werden anhand der folgenden Abbildungen gezeigt. Es zeigen:
- **Fig. 1a und 1b:**: Röntgenaufnahmen einer erfindungsgemäßen, modifizierten Kautschukmischung (Versuchsprodukt A; Fig. 1a) sowie einer Referenzmischung (SiO₂-Referenz (VN3); Fig. 1b);
- **Fig. 2a und 2b:**: Transmissionselektronenmikroskopische Aufnahmen einer erfindungsgemäßen, modifizierten Kautschukmischung (Versuchsprodukt A; Fig. 2a) sowie einer Referenzmischung (SiO₂-Referenz (VN3); Fig. 2b).

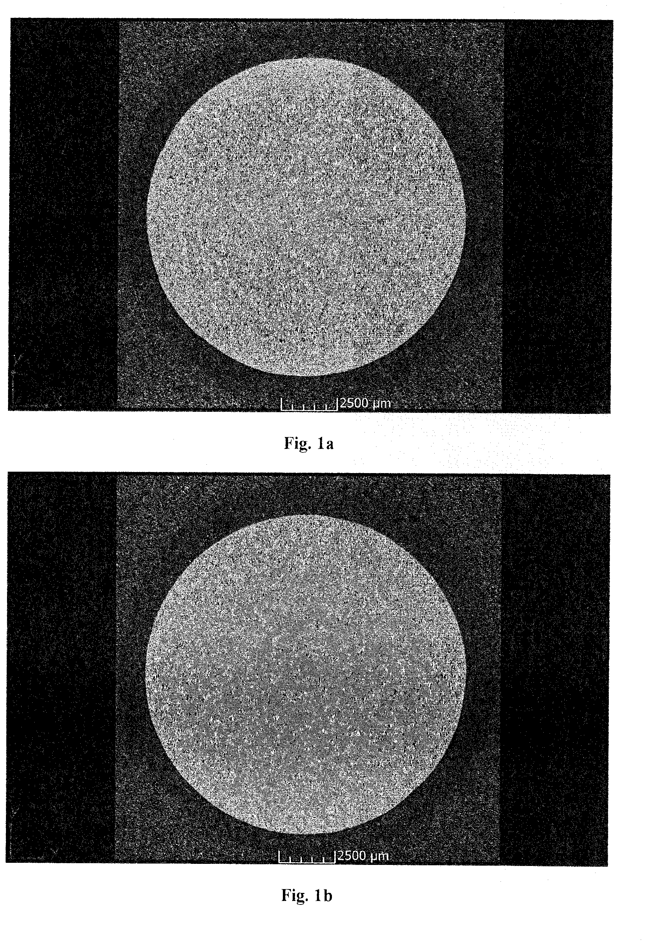

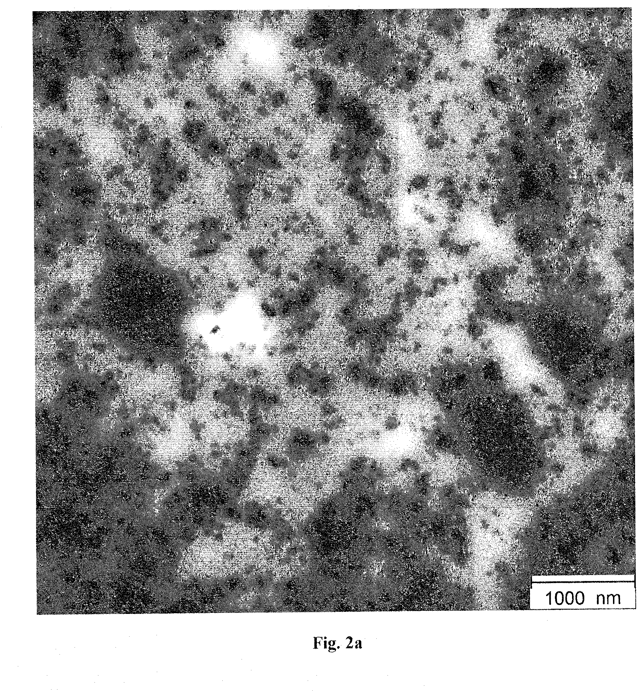

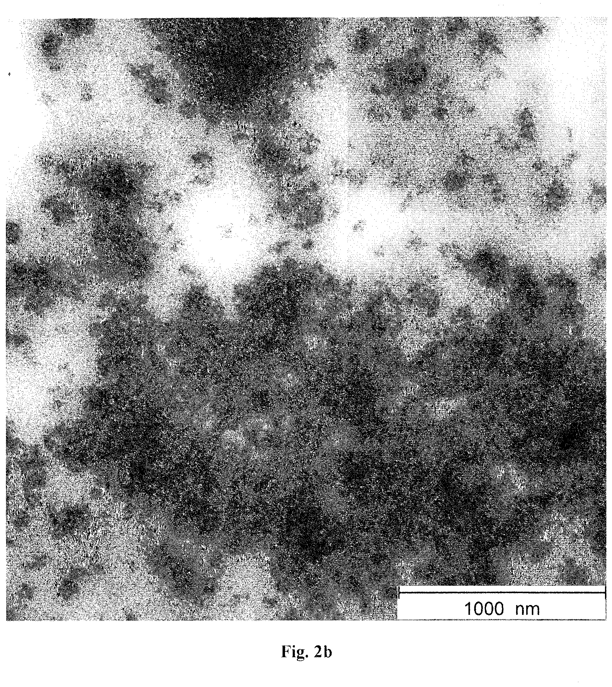

Die Fig. 1a, und 2a zeigen jeweils eine makroskopische Röntgenaufnahme (Fig. 1a) sowie mikroskopische transmissionselektronenmikroskopische Aufnahme (Fig. 2a) des erfindungsgemäßen Versuchsprodukts A. Die Fig. 1b und 2b zeigen jeweils eine makroskopische Röntgenaufnahme (Fig. 1b) sowie mikroskopische transmissionselektronenmikroskopische Aufnahme (Fig. 2b) des Referenzproduktes (VN3) Während die makroskopischen Aufnahmen Fig. 1a und Fig. 1b eine nahezu identische Verteilung des Silicas in der Kautschukmischung vermuten lassen, so ist aus den Fig. 2a und Fig. 2b sofort erkennbar, dass die Verteilung deserfindungsgemäßen Silicas wesentlich homogener ist als die Verteilung des kommerziell erhältlichen Silicas.

Das erfindungsgemäße Silica weist geringere BET-Oberflächen als herkömmliches, in der Kautschukindustrie verwendetes Silica auf. Die Erfinder haben gefunden, dass sich durch das erfindungsgemäße Verfahren die BET-Oberflächen auf ≤ 30 m²/g verringern lassen, was wiederum dazu führt, dass die Inkorporationszeit des erfindungsgemäßen Silicas in eine Kautschukmatrix als Füllstoff zur Herstellung einer modifizierten Kautschukmischung erheblich reduzieren lassen. Die Eigenschaften des erfindungsgemäßen modifizierten Silicas lassen sich anhand der Verfahrensparameter einstellen, so dass der einschlägige Fachmann problemlos für die jeweilige Anwendung benötigte modifizierte Silicas herstellen kann. Für unpolare Kautschukmatrizen werden eher unpolare, fließfähige Polymere eingesetzt, wohingegen für polare Kautschukmatrizen polare, fließfähige Polymere eingesetzt werden. Bisher war es mit einem erheblichen Aufwand verbunden, Füllstoffe mit großen BET-Oberflächen in Kautschukmatrizen einzumischen und homogen zu dispergieren. Das erfindungsgemäße modifizierte Silica lässt sich mit einer großen Zeitersparnis homogen in die Kautschukmatrizen einmischen. Dies war überraschend und nicht vorhersehbar.

Sofern in der Großindustrie der Mischprozess vollständig auf einem Walzwerk durchgeführt wird, ist die Zeitersparnis bei der Verwendung des erfindungsgemäßen modifizierten Silicas noch stärker ausgeprägt. Für das Einmischen und Dispergieren von Füllstoffen mit großen spezifischen Oberflächen werden in der Regel hohe Scherkräfte benötigt. Das Einmischen dieser Füllstoffe auf dem Walzwerk ist daher mit Herausforderungen und einem erhöhten zeitlichen Aufwand verbunden, da der Füllstoff in vielen Portionen über einen längeren Zeitraum eingemischt werden muss. Da das erfindungsgemäße modifizierte Silica durch das fließfähige Polymer kompatibel zu der Kautschukmatrix ist und nach außen wie ein inaktiver Füllstoff wirkt (spezifische Füllstoffoberfläche < 30 m²/g), können auf einen Schlag größere Mengen ohne nennenswerte Verluste eingemischt werden.

Des Weiteren wird der Mischprozess deutlich einfacher und praktikabler, da keine flüssigen bzw. fließfähigen Verarbeitungshilfsmittel auf der Walze verarbeitet werden müssen. Aus naheliegenden Gründen ist die Handhabung besagter Substanzen auf der Walze als unpraktisch anzusehen und führt in der Regel dazu, dass die fließfähigen Verarbeitungshilfsmittel mit dem Füllstoff "angepastet" werden. Das wiederum kann die Performance bzw. die Eigenschaften der Füllstoffe sowie die verstärkende Wirkung negativ beeinflussen. Ebenfalls kann auf diese Weise die Verträglichkeit zwischen Füllstoff und Kautschukmatrix beeinträchtigt werden.

Durch das erfindungsgemäße modifizierte Silica kann auf den Einsatz von fließfähigen Verarbeitungshilfsmittel als solche verzichtet werden, wodurch der Arbeitsschritt des "Anpastens" und die damit verbundenen möglichen Folgen hinfällig werden. Die Kompatibilität zwischen Füllstoff und der Kautschukmatrix wird verbessert, da die Füllstoffoberfläche mit einem fließfähigen Polymer gleicher chemischer Erscheinung modifiziert ist. Die Wahl des fließfähigen Polymers richtet sich nach dem chemischen Aufbau des "Ziel - Kautschuks".

Ein weiterer Vorteil des erfindungsgemäßen Verfahrens besteht darin, dass durch die Verwendung des fließfähigen Polymers die Verarbeitbarkeit der modifizierten Kautschukmischungen bzw. der Gummiartikel beeinflusst werden kann. Fließfähige Polymere können als "vulkanisierbare Weichmacher/Verarbeitungshilfsmittel" Kautschukmischungen zugesetzt werden, um auf diese Weise die Verarbeitbarkeit zu beeinflussen. Kautschukmischungen umfassend das erfindungsgemäße modifizierte Silica haben eine deutlich geringere Viskosität als Kautschukmischungen mit kommerziellen Füllstoffen wie VN3. Die erfindungsgemäßen modifizierten Kautschukmischungen haben daher den Vorteil, dass die Weiterverarbeitung der modifizierten Kautschukmischungen, beispielsweise im Spritzgussprozess, signifikant verbessert werden, da sich durch die Menge des eingesetzten fließfähigen Polymers die Viskosität der modifizierten Kautschukmischung gezielt für die Zielanwendung einstellen lässt.

Das erfindungsgemäße Verfahren zur Herstellung eines modifizierten Silicas als Füllstoff zur Herstellung von modifizierten Kautschukmischungen umfasst in einer weiteren Ausgestaltung einen Silanisierungsschritt. Bei diesem Silanisierungsschritt wird durch die Zugabe einer Silan-Spezies (beispielsweise Silan-(Trialkoxy)-funktionalisierte fließfähige Polymere) zu der ersten Mischung oder zu der zweiten Mischung eine chemische Anbindung an der Silan-Spezies an die Füllstoffoberfläche erreicht. Dabei werden Anbindungen von bis zu 80 % erreicht.

Weiterhin können die erfindungsgemäßen modifizierten Kautschukmischungen bzw. Gummiartikel besser recycelt werden. Im Rahmen des rohstofflichen Recyclings können Sulfidbrücken, welche die Polymerstränge in der modifizierten Kautschukmischung bzw. in dem Gummiartikel verbinden, chemisch aufgebrochen werden. In Silica-Silan Systemen ergeben sich durch das Silan neben den C - S_{X} - C Bindungen auch andere, durch das Silan bedingte, Strukturmerkmale. Da durch das erfindungsgemäße modifizierte Silica eine Vulkanisation zwischen dem fließfähigen Polymer an der Füllstoffoberfläche und der umgebenden Kautschukmatrix erreicht werden kann, treten hier im Gegensatz zu dem herkömmlichen Silica-Silan-System einheitliche Vernetzungsstrukturen auf.

## Patentansprüche

1. Verfahren zur Herstellung eines modifizierten Silicas als Füllstoff zur Herstellung von modifizierten Kautschukmischungen, umfassend die folgenden Schritte:
a) Bereitstellen einer ersten Mischung umfassend wenigstens ein Lösungsmittel und wenigstens eine siliciumhaltige Verbindung,
b1) Erwärmen der Mischung, und/oder
b2) Zugabe eines Katalysators zu der Mischung,
wobei eine zweite Mischung umfassend Silica erhalten wird,
wobei vor, während oder nach den Schritten b1) und/oder b2) wenigstens ein fließfähiges Polymer zugegeben wird,
c1) zumindest teilweises Einengen der zweiten Mischung, und/oder
c2) Filtrieren der zweiten Mischung,
wobei nach den Schritten c1) und/oder c2) modifiziertes Silica erhalten wird.

2. Verfahren nach Anspruch 1, wobei das Lösungsmittel ein organisches Lösungsmittel umfasst, wobei das organische Lösungsmittel ausgesucht ist aus einem oder mehreren Mitgliedern der Gruppe bestehend aus: Alkoholen, Ethern, Estern, Alkanen, vorzugsweise Methanol, Ethanol, Toluol, THF, weiter bevorzugt Ethanol und/oder Toluol, insbesondere bevorzugt Ethanol und Toluol.

3. Verfahren nach Anspruch 1 oder 2, wobei die erste Mischung Wasser umfasst, bevorzugt in einer Menge von 0,01 bis 20 Gewichtsprozent, bevorzugt 0,1 bis 15 Gewichtsprozent, weiter bevorzugt 0, 5 bis 11 Gewichtsprozent, jeweils bezogen auf das Gesamtgewicht von Lösungsmittel und siliciumhaltiger Verbindung.

4. Verfahren nach einem der vorherigen Ansprüche, wobei die siliciumhaltige Verbindung ein Silikat, insbesondere ein Orthosilikat, umfasst oder ist, wobei das Orthosilikat vorzugsweise ausgesucht ist aus einem oder mehreren Mitgliedern der Gruppe bestehend aus: Tetraethylorthosilikat (TEOS), Tetramethylorthosilikat (TMOS), Tetrapropylorthosilikat (TPOS), Tetrabutylorthosilikat (TBOS), SiO₄⁴⁻ (Metasilikate; Wasserglas), SiCl₄, HₓSiCl_{y}, mit x + y = 4, wobei weiter bevorzugt das Orthosilikat TEOS umfasst oder TEOS ist, und/oder wobei das fließfähige Polymer ein fließfähiger Kautschuk ist, wobei der fließfähige Kautschuk vorzugsweise ausgewählt ist aus der Gruppe bestehend aus: Dienkautschuken, insbesondere Isopren-Kautschuk (IR), Butadien-Kautschuk (BR), Nitril-Butadien-Kautschuk (NBR), Ethylen-Propylen-Dien-Kautschuk (EPDM), Styrol-Butadien-Kautschuk (SBR) Chloropren-Kautschuk (CR) und gesättigten Kautschuken, insbesondere hydrierter Acrylnitrilbutadien-Kautschuk (HNBR), Fluorkautschuk (FKM), wobei vorzugsweise das fließfähige Polymer eines oder mehrere der folgenden Merkmale aufweist:
- eine mittlere Molmasse im Bereich von 1500 bis 50000 g/mol, vorzugsweise 2500 bis 45000 g/mol, weiter bevorzugt 2600 bis 42000 g/mol, und insbesondere bevorzugt 2600 bis 40000 g/mol,
- eine Viskosität bei 20 °C von ≤ 150 Pa·s, weiter bevorzugt ≤ 70 Pa·s besonders bevorzugt ≤ 20 Pa s und insbesondere bevorzugt ≤ 1 Pa·s.

5. Verfahren nach einem der vorherigen Ansprüche, wobei der ersten Mischung ein Katalysator zugegeben wird, wobei der Katalysator vorzugsweise ein basischer Katalysator ist, wobei der basische Katalysator weiter bevorzugt ausgewählt ist aus einem oder mehreren Mitgliedern der Gruppe bestehend aus: Aminbasen und/oder wässrigen Alkalimetalllaugen, wobei der basische Katalysator noch weiter bevorzugt n-Butylamin und/oder NH₄OH umfasst, insbesondere bevorzugt n-Butylamin ist.

6. Verfahren nach einem der vorherigen Ansprüche, wobei die erste Mischung auf ≥ 25 °C, bevorzugt auf ≥ 40 °C und weiter bevorzugt ≥ 80 °C erhitzt wird.

7. Verfahren nach einem der vorherigen Ansprüche, wobei das Massenverhältnis von siliciumhaltiger Verbindung zu fließfähigem Polymer 1000 : 1 bis 1 : 1, vorzugsweise 100 : 1 bis 3 : 1, weiter bevorzugt 20 : 1 bis 5 : 1, noch weiter bevorzugt 15 : 1 bis 12 : 1 beträgt.

8. Verfahren nach einem der vorherigen Ansprüche, wobei nach den Schritten c1) und/oder c2) das modifizierte Silica getrocknet wird, vorzugsweise in einem Trockenschrank, insbesondere einem Vakuumtrockenschrank, vorzugsweise für mindestens 8 Stunden oder mehr, und unabhängig hiervon bei einer Temperatur von wenigstens 60 °C, oder wobei die Trocknung mittels Spin-Flash-Trocknung erfolgt.

9. Modifiziertes Silica hergestellt mit einem Verfahren gemäß einem der Ansprüche 1 bis 8.

10. Modifiziertes Silica gemäß Anspruch 9, wobei das modifizierte Silica eine oder mehrere der folgenden Eigenschaften aufweist:
- eine Partikelgröße von 10 bis 500 nm, bevorzugt 10 bis 100 nm, besonders bevorzugt 10 bis 80 nm, bestimmbar mittels Transmissionselektronenmikroskopie,
- eine spezifische Oberfläche von 1 bis ≤ 30 m²/g, weiter bevorzugt 2 bis ≤ 28 m²/g, besonders bevorzugt 3 bis ≤ 25 m²/g, auf, bestimmbar mittels volumetrischer Gasadsorption.

11. Verfahren zur Herstellung einer modifizierten Kautschukmischung durch Einmischen des modifizierten Silicas gemäß einem der Ansprüche 9 oder 10 in eine Kautschukmischung, insbesondere eine Naturkautschukmischung, wobei eine modifizierte Kautschukmischung erhalten wird.

12. Verfahren gemäß Anspruch 11, wobei das Massenverhältnis von Kautschukmischung zu modifiziertem Silica im Bereich von 0,25 phr - 120 phr liegt, vorzugsweise 5 phr bis 100 phr, weiter bevorzugt 5 phr bis 80 phr oder 25 phr bis 60 phr.

13. Verfahren gemäß Anspruch 11 oder 12, wobei das Einmischen des modifizierten Silicas mittels eines Stempelkneters oder einer Walze oder mittels eines Mischextruders erfolgt, und/oder wobei der Kautschukmischung und/oder dem modifizierten Silica und/oder der modifizierten Kautschukmischung weitere Stoffe zugesetzt werden, insbesondere Vulkanisationsmittel und/oder Mastizierchemikalien und/oder Ankopplungsreagenzien.

14. Modifizierte Kautschukmischung, herstellbar nach einem Verfahren gemäß einem der Ansprüche 11 bis 13.

15. Gummiartikel herstellbar aus einer modifizierten Kautschukmischung gemäß Anspruch 14, wobei der Gummiartikel ausgewählt ist aus der Gruppe bestehend aus: Motorenlager, Fahrzeugreifen, Luftreifen, Reifenlaufflächen, Kabelmänteln, Schläuchen, Treibriemen, Förderbändern, Walzenbelägen, Reifen, Schuhsohlen, Dichtungsringen und Dämpfungselementen, wobei vorzugsweise die modifizierte Kautschukmischung vulkanisiert wird.
